# EUROPEAN PATENT SPECIFICATION

(11) **EP 4 190 152 B1**
(45) Date of publication and mention of the grant of the patent: **28.10.2026**
(21) Application number: 22209870.9
(22) Date of filing: 28.11.2022
(51) Int. Cl.: A01K 89/01

(54) **FISHING SPINNING REEL**
ANGELWINDE
MOULINET DE PÊCHE

(30) Priority: 01.12.2021 JP 2021195457
(43) Date of publication of application: 07.06.2023
(73) Proprietor: Globeride, Inc., Higashikurume-shi Tokyo 203-8511 (JP)
(72) Inventor: HIROTA, Yusuke, Higashi Kurume-shi, 203-8511 (JP); MATSUHASHI, Manabu, Higashi Kurume-shi, 203-8511 (JP); HORIE, Hironori, Higashi Kurume-shi, 203-8511 (JP)
(74) Representative: Boult Wade Tennant LLP

(56) References cited:
- EP-A1- 4 042 864
- JP-A- H09 238 600
- US-B1- 6 336 604

## Description

### BACKGROUND OF THE INVENTION

### 1. TECHNICAL FIELD

The present invention relates to a fishing spinning reel.

### 2. DESCRIPTION OF THE RELATED ART

A fishing spinning reel includes a rotor that rotates in conjunction with a winding-up operation performed on a handle, a bail support member that is installed on a support arm of the roller, and supports a bail, and a line roller that is supported by the bail support member, and guides a fishing line to a spool around which the fishing line is wounded and held (see JP H09-149749 A). The line roller includes a tubular roller that is rotatably provided in a shaft portion with a bearing interposed therebetween.

### RELEVANT REFERENCES

### LIST OF RELEVANT PATENT LITERATURE

Patent Literature 1: Japanese Application Publication No. H09-149749

Documents US 6 336 604 B1 and JP H09 238600 A disclose fishing spinning reels according to the preamble of claim 1.

### SUMMARY OF THE INVENTION

The roller of the line roller comprises a fishing line guiding portion (a groove) that guides the fishing line to the spool. If the fishing line guiding portion has a great width of the groove, the fishing line easily moves on the fishing line guiding portion when the fishing line is wound up, and this causes a problem in which the fishing line guiding portion is rubbed against the fishing line, and noise is generated. On the other hand, if the width of the groove of the fishing line guiding portion is decreased, when the bail is opened from a state where tension acts on the fishing line, the fishing line guiding portion is rubbed against the fishing line depending on the depth or an R-shape of the groove, and this causes a problem in which the fishing line is damaged.

The present invention has been made to solve the problems described above, and it is an object of the present invention to provide a fishing spinning reel that avoids the generation of noise due to line rubbing during an operation to wind up a fishing line, and avoids the damage of the fishing line.

A fishing spinning reel according to the present invention is a fishing spinning reel **as** claimed in claim 1 comprising: a rotor that rotates in conjunction with a winding-up operation performed on a handle; a bail support member that is installed on a support arm of the rotor, and supports a bail; and a line roller that is supported by the bail support member, and guides a fishing line to a spool around which the fishing line is wound and held. The line roller comprises a roller that is rotatably provided in a shaft portion with a bearing interposed between the roller and the shaft portion. The roller comprises: a fishing line guiding portion that is disposed on a side of the bail support member, and guides the fishing line to the spool; a fishing line leading portion that is formed to have a diameter that is greater than the diameter of the fishing line guiding portion, and leads the fishing line to the fishing line guiding portion; and a fishing line regulating portion that is arranged to be inclined between the fishing line guiding portion and the fishing line leading portion, and regulates a movement of the fishing line in an axial direction of the shaft portion.

The inclined fishing line regulating portion can prevent the fishing line of the fishing line guiding portion from greatly moving in the axial direction of the shaft portion. This can avoid the generation of noise due to line rubbing during an operation to wind up the fishing line. Furthermore, the fishing line regulating portion is inclined from the fishing line guiding portion toward the fishing line leading portion. Therefore, even if the bail is raised in a state where tension acts on the fishing line, the fishing line is not caught by the fishing line regulating portion. This can avoid the damage of the fishing line.

According to the invention, an inclination angle of the fishing line regulating portion relative to an axial center of the shaft portion be 35 to 55°.

Therefore, rubbing or twisting of the fishing line can be more suitably avoided for a variety of fishing lines regardless of the thickness or material of the fishing line.

Furthermore, it is preferable that an inclination angle of the fishing line leading portion relative to the axial center of the shaft portion be 1 to 7°.

According to the present invention, the fishing line leading portion is inclined, and this enables the fishing line to be easily led to the fishing line guiding portion.

Moreover, it is preferable that a width in the axial direction of the fishing line guiding portion be 1 mm or less.

According to the present invention, a movement of the fishing line in the axial direction of the shaft portion is regulated, and noise due to rubbing of the fishing line against the roller can be further avoided.

According to the present invention, a fishing spinning reel can be provided that avoids the generation of noise due to line rubbing during an operation to wind up a fishing line, and avoids the damage of the fishing line.

### BRIEF DESCRIPTION OF THE DRAWINGS

FIG. 1 is a diagram illustrating the entire configuration of a fishing spinning reel according to an embodiment of the present invention;
FIG. 2 is a sectional view of a line roller; and
FIG. 3 is a perspective view illustrating a roller of the line roller.

### DETAILED DESCRIPTION

### <Embodiment>

An embodiment of the present invention is described below with reference to the attached drawings. Note that in the description of the drawings, the same element is denoted by the same reference sign, and a duplicate description is appropriately omitted.

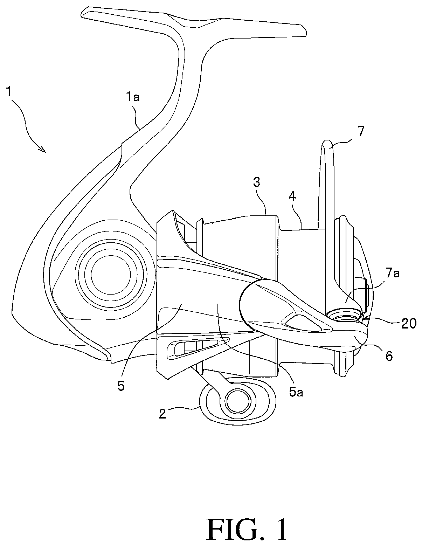

As illustrated in FIG. 1, a fishing spinning reel comprises a reel body 1, and a leg 1a that is used to install the reel body 1 on a reel installation portion of a not-illustrated fishing rod. In the reel body 1, a not-illustrated driving gear is provided, and the driving gear is driven to rotate by performing an operation to rotate a handle 2. The driving gear is meshed with a hollow pinion.

A not-illustrated spool shaft is inserted into the pinion in an axial direction, and a spool 3 around which a fishing line is wound is installed at a distal end of the spool shaft. In a front portion of the spool 3, a line winding drum 4 is disposed. A rotor 5 that rotates integrally with the pinion is installed on the pinion. The rotor 5 is provided with a pair of support arms (only one side is illustrated) 5a. A bail 7 is supported by the pair of support arms 5a with a pair of bail support members 6 (only one side is illustrated) interposed therebetween. A line roller 20 is provided between the bail support member 6 and the bail 7.

The bail 7 is provided to be movable between a fishing line winding-up position and a fishing line releasing position, by using the pair of bail support members 6. In the bail 7, a line slider 7a is provided at an end on a side of the bail support member 6. The line slider 7a is a portion that moves the fishing line that has been picked up by the bail 7 to the line roller 20. The line slider 7a has a diameter that gradually increases in a portion closer to the line roller 20, and is hollow. Details of the line roller 20 will be described later.

The driving gear described above is engaged with a not-illustrated oscillating mechanism. An operation is performed to rotate the handle 2 in such a way that the driving gear is rotated, and this enables the spool shaft (the spool 3) to be moved forward or backward.

In the fishing spinning reel having such a configuration, after casting has been performed in a state where the bail 7 has been moved (rotationally moved) to the fishing line releasing position, the bail 7 is moved (rotationally moved) to the fishing line winding-up position, and an operation is performed to rotate the handle 2. By doing this, a rotational motion of the handle 2 is transmitted to the pinion via the driving gear, and the pinion rotates. Furthermore, simultaneously, the rotational motion of the handle 2 is transmitted to the spool shaft via the oscillating mechanism, and the spool shaft moves forward or backward. At this time, the spool 3 moves forward or backward in a state where the rotor 5 is rotating, and therefore the fishing line is parallelly and evenly wound around the line winding drum 4 of the spool 3 through the line roller 20.

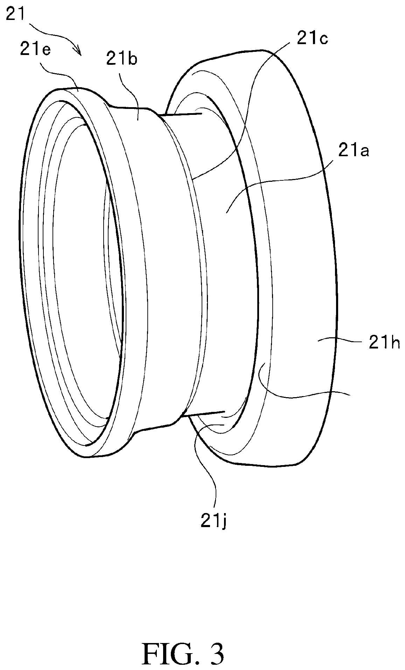

Next, a structure around the line roller 20 is described. As illustrated in FIGS. 1 to 3, the line roller 20 comprises a shaft portion 15, a roller 21, bearings 22 and 23, and support members 24 and 25.

The shaft portion 15 is a fastener that fastens each component part of the line roller 20 between the bail support member 6 and the line slider 7a. A distal end of the shaft portion 15 is screwed into a reception portion 9 that is provided inside the bail support member 6. Note that the shaft portion 15 fastens each of the component parts from a side of the line slider 7a, but may fasten each of the component parts from a side of the bail support member 6.

In an outer periphery of the shaft portion 15, the bearings 22 and 23 are arranged along the axial direction of the shaft portion 15. Between the bearing 22 and the roller 21, the support member 24 having a tubular shape is arranged. Furthermore, between the bearing 23 and the roller 21, the support member 25 having a tubular shape is arranged. The support members 24 and 25 are members that support the roller 21 from an inside of the roller 21. The roller 21 and the support members 24 and 25 are rotatable around the shaft portion 15. Furthermore, in a portion where the support member 24 and the support member 25 face each other, a positioning groove 26 is disposed in a circumferential direction.

The roller 21 is a cylindrical member, and is rotatably arranged between the bail support member 6 and the line slider 7a. The roller 21 principally comprises a fishing line guiding portion 21a, a fishing line leading portion 21b, and a fishing line regulating portion 21c on an outer peripheral face. The fishing line guiding portion 21a is a portion that is disposed on the side of the bail support member 6, and guides a fishing line N to the spool 3. The fishing line guiding portion 21a may be parallel to an axial center O, or may be inclined. In a case where the fishing line guiding portion 21a is inclined, the fishing line guiding portion 21a is inclined to have a diameter that decreases in a portion closer to the bail support member 6. It is sufficient if a width in the axial direction (a length in the axial direction) of the fishing line guiding portion 21a is appropriately set, but it is preferable that the width be, for example, 1 mm or less.

The fishing line leading portion 21b is a portion that is disposed closer to the line slider 7a than the fishing line guiding portion 21a, and leads the fishing line N to a side of the fishing line guiding portion 21a. The fishing line leading portion 21b has a diameter that is greater than a diameter of the fishing line guiding portion 21a. The fishing line leading portion 21b comprises a curved face or an inclined face for which a diameter decreases in a portion closer to the bail support member 6, or comprises a combination of the curved face and the inclined face. It is sufficient if an inclination angle of the fishing line leading portion 21b relative to the axial center O (an inclination angle of a portion that faces the fishing line regulating portion 21c) is appropriately set, but it is preferable that the inclination angle be set to, for example, 1 to 7°.

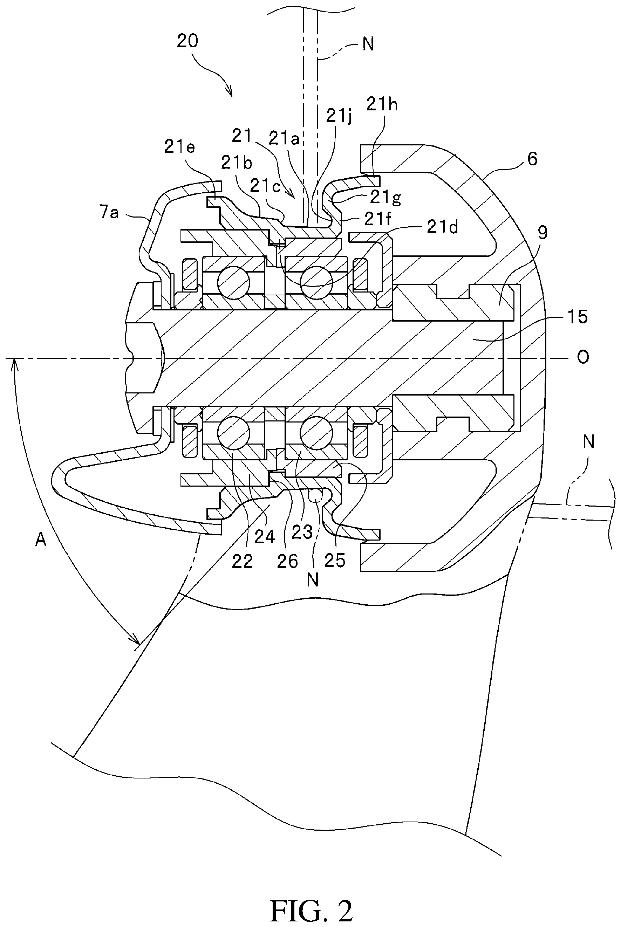

The fishing line regulating portion 21c is a portion that is inclined between the fishing line guiding portion 21a and the fishing line leading portion 21b, and regulates a movement of the fishing line N in the axial direction of the shaft portion 15. The fishing line regulating portion 21c is inclined to have a diameter that decreases in a portion closer to the bail support member 6. According to the invention, the inclination angle of the fishing line regulating portion 21c relative to the axial center O (the inclination angle A of FIG. 2) is **35** to 55°. At a boundary between the fishing line guiding portion 21a and the fishing line regulating portion 21c, inclined faces may face each other, or chamfering may be performed to form a curved face. Similarly, at a boundary between the fishing line leading portion 21b and the fishing line regulating portion 21c, inclined faces may face each other, or chamfering may be performed to form a curved face.

As illustrated in FIG. 2, on an inner peripheral face of the roller 21, a protrusion 21d that protrudes in a direction of the axial center O is disposed. The protrusion 21d is a portion that is fitted into the positioning groove 26 By providing the protrusion 21d, the roller 21 can be easily positioned relative to the support members 24 and 25.

At an end of the fishing line leading portion 21b, an extension 21e that is provided to extend to a side of the line slider 7a is disposed. The extension 21e faces an inner peripheral face of the line slider 7a to be slightly spaced apart from each other. By providing the extension 21e, water, trash, the fishing line N, or the like is prevented from entering an inside of the line slider 7a.

At an end of the fishing line guiding portion 21a, a rising portion 21f, a folded portion 21g, and an extension 21h that extend to the side of the bail support member 6 are continuously provided. The rising portion 21f is a portion that perpendicularly rises from the end of the fishing line guiding portion 21a in a radially outward direction. The folded portion 21g is disposed closer to the line slider 7a than the rising portion 21f. The fishing line guiding portion 21a, the rising portion 21f, and the folded portion 21g form a recess 21j that is recessed to the side of the bail support member 6.

The extension 21h is provided to extend from the folded portion 21g to the side of the bail support member 6. The extension 21h has been formed to have a diameter that increases in a portion closer to the bail support member 6. The extension 21h faces an inner peripheral face of the bail support member 6 to be slightly spaced apart from each other. By providing the extension 21h, water, trash, the fishing line N, or the like is prevented from entering an inside of the bail support member 6.

By employing the fishing spinning reel according to the present embodiment described above, the inclined fishing line regulating portion 21c can prevent the fishing line N of the fishing line guiding portion 21a from greatly moving in the axial direction of the shaft portion 15. This can avoid the generation of noise due to line rubbing during an operation to wind up the fishing line N. Furthermore, the fishing line regulating portion 21c is inclined to have a diameter that decreases in a portion from the fishing line leading portion 21b toward the fishing line guiding portion 21a. Therefore, even if the bail 7 is raised in a state where tension acts on the fishing line N, the fishing line N is not caught by the fishing line regulating portion 21c. This can avoid the damage of the fishing line N.

According to the invention, the inclination angle of the fishing line regulating portion 21c relative to the axial center O of the shaft portion 15 is 35 to 55°. This can more suitably avoid rubbing or twisting of the fishing line N for a variety of fishing lines N regardless of the thickness or material of the fishing line N.

Furthermore, the fishing line leading portion 21b is inclined by 1 to 7° relative to the axial center O of the shaft portion 15. This enables the fishing line N to be easily led to the fishing line guiding portion 21a. Moreover, the recess 21j is provided. Therefore, the fishing line regulating portion 21c and the recess 21j can further regulate a movement in the axial direction of the fishing line N, and can also prevent the fishing line N from moving in a height direction. This causes the fishing line N to be easily housed in the fishing line guiding portion 21a.

Furthermore, a width in the axial direction of the fishing line guiding portion 21a is 1 mm or less. This regulates a movement of the fishing line N in the axial direction, and can further avoid noise due to rubbing of the fishing line N against the roller 21.

An embodiment according to the invention of the present application has been described above. The present invention is not limited to the embodiment described above, and respective components can be appropriately modified without departing from the scope of the present invention defined by the appended claims.

### REFERENCE SIGNS LIST

- 1: Reel body

- 1a: Leg
- 2: Handle
- 3: Spool
- 4: Line winding drum
- 5: Rotor
- 6: Bail support member
- 7: Bail
- 20: Line roller
- 21a: Fishing line guiding portion
- 21b: Fishing line leading portion
- 21c: Fishing line regulating portion

## Claims

1. A fishing spinning reel comprising:
a rotor (5) that rotates in conjunction with a winding-up operation performed on a handle (2);
a bail support member (6) that is installed on a support arm (5a) of the rotor (5), and supports a bail (7); and
a line roller (20) that is supported by the bail support member (6), and guides a fishing line (N) to a spool (3) around which the fishing line (N) is wound and held,
wherein the line roller (20) comprises a roller (21) that is rotatably provided in a shaft portion (15) with a bearing (22, 23) interposed between the roller (21) and the shaft portion (15), and
the roller (21) comprises:
a fishing line guiding portion (21a) that is disposed on a side of the bail support member (6), and guides the fishing line (N) to the spool (3);
a fishing line leading portion (21b) that is formed to have a diameter that is greater than the diameter of the fishing line guiding portion (21a), and leads the fishing line (N) to the fishing line guiding portion (21a); and
a fishing line regulating portion (21c) that is arranged to be inclined between the fishing line guiding portion (21a) and the fishing line leading portion (21b), and regulates a movement of the fishing line (N) in an axial direction of the shaft portion (15); **characterized in that**:
an inclination angle of the fishing line regulating portion (21c) relative to an axial center of the shaft portion (15) is 35 to 55°.

2. The fishing spinning reel according to claim 1, wherein an inclination angle of the fishing line leading portion (21b) relative to an axial center of the shaft portion (15) is 1 to 7°.

3. The fishing spinning reel according to claim 1 or claim 2, wherein a width in the axial direction of the fishing line guiding portion (21a) is 1 mm or less.

## Patentansprüche

1. Angelwinde, umfassend:
einen Rotor (5), der sich im Zusammenhang mit einem an einem Griff (2) durchgeführten Aufziehvorgang dreht;
ein Haltebügel-Stützelement (6), das an einem Stützarm (5a) des Rotors (5) angebracht ist und einen Haltebügel (7) stützt; und
eine Schnurrolle (20), die von dem Haltebügel-Stützelement (6) gestützt wird und eine Angelschnur (N) zu einer Spule (3) führt, um die die Angelschnur (N) aufgewickelt und gehalten wird, wobei die Schnurrolle (20) eine Rolle (21) umfasst, die drehbar in einem Wellenabschnitt (15) bereitgestellt ist, wobei ein Lager (22, 23) zwischen der Rolle (21) und dem Wellenabschnitt (15) eingefügt ist, und
die Rolle (21) umfasst:
einen Angelschnur-Führungsabschnitt (21a), der an einer Seite des Haltebügel-Stützelements (6) angeordnet ist und die Angelschnur (N) zur Spule (3) führt;
einen Angelschnur-Zuführungsabschnitt (21b), der so gebildet ist, dass er einen Durchmesser aufweist, der größer ist als der Durchmesser des Angelschnur-Führungsabschnitts (21a); und die Angelschnur (N) zum Angelschnur-Führungsabschnitt (21a) zuführt; und einen Angelschnur-Regulierungsabschnitt (21c), der zwischen dem Angelschnur-Führungsabschnitt (21a) und dem Angelschnur-Zuführungsabschnitt (21b) geneigt eingerichtet ist und eine Bewegung der Angelschnur (N) in axialer Richtung des Wellenabschnitts (15) reguliert; **dadurch gekennzeichnet, dass**:
ein Neigungswinkel des Angelschnur-Regulierungsabschnitts (21c) relativ zu einem axialen Mittelpunkt des Wellenabschnitts (15) 35 bis 55° beträgt.

2. Angelrolle nach Anspruch 1, wobei ein Neigungswinkel des Angelschnur-Zuführungsabschnitts (21b) relativ zu einer axialen Mitte des Wellenabschnitts (15) 1 bis 7° beträgt.

3. Angelrolle nach Anspruch 1 oder Anspruch 2, wobei eine Breite des Angelschnur-Führungsabschnitts (21a) in Axialrichtung 1 mm oder weniger beträgt.

## Revendications

1. Moulinet de pêche comprenant :
un rotor (5) qui tourne en conjonction avec une opération d'enroulement effectuée sur une manivelle (2) ;
un élément de support d'anse (6) installé sur un bras de support (5a) du rotor (5) et supportant une anse (7) ; et
un galet de ligne (20) supporté par l'élément de support d'anse (6), et guidant une ligne de pêche (N) vers une bobine (3) autour de laquelle la ligne de pêche (N) est enroulée et maintenue, dans lequel le galet de ligne (20) comprend un galet (21) monté en rotation dans une partie d'arbre (15) avec un palier (22, 23) interposé entre le galet (21) et la partie d'arbre (15), et
le galet (21) comprend :
une partie de guidage de ligne de pêche (21a) qui est disposée sur un côté de l'élément de support d'anse (6) et guide la ligne de pêche (N) vers la bobine (3) ;
une partie d'entraînement de ligne de pêche (21b) dont le diamètre est supérieur à celui de la partie de guidage de ligne de pêche (21a) et qui conduit la ligne de pêche (N) vers la partie de guidage de ligne de pêche (21a) ; et une partie de régulation de ligne de pêche (21c) agencée inclinée entre la partie de guidage de ligne de pêche (21a) et la partie d'entraînement de ligne de pêche (21b) et qui régule un mouvement de la ligne de pêche (N) dans une direction axiale de la partie d'arbre (15) ; **caractérisé en ce que** :
un angle d'inclinaison de la partie de régulation de ligne de pêche (21c) par rapport à un centre axial de la partie de l'arbre (15) est de 35 à 55°.

2. Moulinet de pêche selon la revendication 1, dans lequel un angle d'inclinaison de la partie de guidage de ligne de pêche (21b) par rapport à un centre axial de la partie d'arbre (15) est de 1 à 7°.

3. Moulinet de pêche selon la revendication 1 ou la revendication 2, dans lequel une largeur dans la direction axiale de la partie de guidage de ligne de pêche (21a) est de 1 mm ou moins.
